(19) Europäisches Patentamt
European Patent Office
Office européen des brevets

(11) Publication number: 0 093 023
A2

(12) # EUROPEAN PATENT APPLICATION

(21) Application number: 83302388.0

(22) Date of filing: 27.04.83

(51) Int. Cl.³: C 08 J 5/04
C 08 L 63/00
//C08F138/00, (C08L63/00, 49/00)

(30) Priority: 27.04.82 GB 8212086

(43) Date of publication of application: 02.11.83 Bulletin 83/44

(84) Designated Contracting States: DE FR GB NL

(71) Applicant: QMC Industrial Research Limited
229 Mile End Road
London E1 4AA(GB)

(72) Inventor: Young, Robert Joseph
28, Parsonage Lane
Bishop Stortford Hertfordshire(GB)

(74) Representative: Boon, Graham Anthony et al,
Elkington and Fife High Holborn House 52/54 High Holborn
London, WC1V 6SH(GB)

(54) **Fibre-reinforced composite material.**

(57) A fibre-reinforced composite material is described comprising a matrix, for example of an epoxy resin, in which are incorporated polymer single crystal fibres, for example of a polydiacetylene.

EP 0 093 023 A2

Croydon Printing Company Ltd.

# Fibre-reinforced composite material

This invention relates to a fibre-reinforced composite material. The technique for making fibre-reinforced composites by incorporating stiff fibres into a polymeric matrix is now well-established. Such composites are normally required to have high stiffness and strength and are now widely used in engineering applications. In order to produce composites with useful properties it is generally desirable that the reinforcing fibres should have high values both of stiffness and of strength, and the reinforcing fibres generally used are inorganic fibres such as those of glass or carbon.

In recent years there have been attempts to use polymer fibres as reinforcements for polymeric matrices. Two specific polymer fibres which have been used for this purpose are ultra-drawn polyethylene and Kevlar ("Kevlar" is a registered Trade Mark used for aramid fibres). Polymer reinforcement fibres have the advantage of being relatively stiff with low density, and so their specific moduli (modulus divided by specific gravity) tend to compare well with glass and carbon fibres. However, conventional polymer fibres suffer from creep, which is a major drawback to their use in high-performance composites. They also suffer from a deterioration of properties with heat and in the presence of solvents, and aramid fibres deteriorate in the presence of ultraviolet radiation.

According to the present invention there is provided a fibre-reinforced composite material comprising a matrix in which are incorporated polymer single crystal fibres. Preferably the polymer single crystal fibres are of a polydiacetylene.

A study of the compressive behaviour of Kevlar fibres has shown that the mechanism of failure is a kinking process which can lead to damage within the fibres. Because Kevlar fibres are not single crystal and are radially isotropic about the fibre axis this kinking can take place if a fibre is bent in any direction. In contrast, polymer single crystal fibres are radially anisotropic, and when such fibres are bent or compressed parallel to the fibre axis they deform by a twinning mechanism. This is similar to the kinking process in conventional polymer fibres but differs in certain important respects. One of these is that twinning in the polymer crystals is substantially reversible. Hence the molecules kink when compressed and unkink when restretched with very little residual damage.

Polymer single fibres show little or no creep at room temperature or even at higher temperatures. This is reflected in good creep resistance of the composites.

Referring now more particularly to polydiacetylene single crystal fibres, by way of example, these have a number of advantages over conventional polymer fibre-reinforced composites. Firstly, polydiacetylene single crystal fibres show no measurable creep over a temperature range at least from room temperature to 100°C, and hence composites containing these fibres have good creep properties. Secondly, polydiacetylene single crystals have good thermal stability. They do not melt and only start to decompose at high temperatures (up to 350°C). Thirdly, unlike Kevlar fibres, which are prone to a degradation in their properties in the presence of certain solvents and in the presence of ultraviolet radiation, most polydiacetylene single crystals are completely insoluble in solvents and have good chemical properties, and are unaffected by ultraviolet radiation. These are reflected in the properties of composites containing polydiacetylene single crystal fibres.

Polydiacetylenes have the general formula:

$$\left[ \underset{R_1}{C} - C \equiv C - \overset{R_2}{C} \right]_n \qquad (1)$$

and are formed from monomers of general formula:

$$R_1 - C \equiv C - C \equiv C - R_2 \qquad (2)$$

$R_1$ and $R_2$ may be the same as one another (symmetrical diacetylenes) or different (asymmetrical diacetylenes)

Polydiacetylenes which form single crystal fibres include those in which $R_1$ and $R_2$ are the same as each other and represent:

$-CH_2-O-\overset{O}{\overset{\|}{C}}-NH-C_2H_5$ (ethyl urethane) (3)

$-CH_2-O-\overset{O}{\overset{\|}{C}}-NH-C_6H_5$ (phenyl urethane) (4)

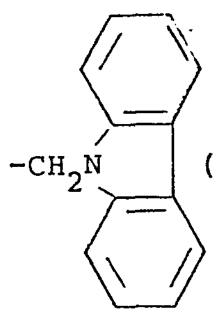 (N-carbazole) (5)

Methods of synthesising the monomer have been well documented and use conventional synthetic organic techniques. In order to produce polymer single crystal fibres it is necessary first of all to produce monomer single crystal fibres. Several methods can be used. A typical example is to make a hot saturated monomer solution in a common solvent such as toluene, benzene, dioxane or water. Fibre-producing solvents for the derivatives described above are as follows:

| Derivative | Solvent |
|---|---|
| ethyl urethane | water or acetone/ petroleum ether mixture |
| phenyl urethane | dioxane |
| N-carbazole | toluene |

The saturated solution is then cooled at a controlled rate to produce seeds and then held at a constant temperature for a period of time long enough to produce monomer single crystal fibres. The monomer fibres thus produced are then polymerized using heat, ultra-violet light or ionizing radiation.

Example of the production of polydiacetylene single crystal fibres and composites formed therefrom will now be given.

Example 1

A saturated solution was prepared consisting of 1.0g of the above-mentioned symmetrical N-carbazole derivative in 100 ml of toluene at 80 °C. Seeds were produced by cooling the solution to 50 °C at 5 °C per day. Crystals up to 4 cm long grew by holding the temperature of the solution for 2 days at 50 °C. These crystals were then polymerized with 50 Mrad of gamma rays. The resultant fibres are 100% crystalline perfect polymer single crystals.

Example 2

The N-carbazole derivative of Example 1 was dissolved in toluene at 65 °C. The solution was cooled at a rate of 1 °C/hr to room temperature. The fibres grown were typically 15 mm long and 20 - 150 microns in diameter. The monomer fibres were polymerized with a dose of 30 Mrad of gamma rays from a $^{60}Co$ source.

Example 3

The symmetrical ethyl urethane derivative of Equation (3) above was dissolved in distilled water and crystallized by cooling to give monomer fibres 10-100 microns in

diameter and up to 50 mm long. Some of the fibres were polymerized using gamma rays from a $^{60}C$ source at the rate of 1 Mrad/hr, and others were polymerized thermally by heating at 80°C.

Example 4

Eight samples of a composite material were prepared using the fibres produced in Example 2. For this purpose steel moulds were used having internal dimensions 38 mm x 6 mm or 30 mm x 10 mm, filled to depths of from 1 to 2 mm. Alternate layers of a two-part, solvent-free, cold-setting epoxy resin (XD 927 produced by Ciba-Geigy Plastics and Additives Company, Cambridge, England) and fibres were laid down, the fibres being carefully aligned parallel to each other longitudinally of the mould. The resins and fibres were compressed in the mould in a press. The moulded samples were held under pressure for 16 hours at room temperature (22 ± 2°C), by which time the resin had hardened. The samples were then removed from the mould.

The samples were deformed in both tension and compression in a testing apparatus, and the results of the tests are shown in the Table.

TABLE

| Sample | $V_f$ (%) | Maximum Load (Kg) (at fracture) | $\sigma_f$ tension (MPa) (at fracture) | $\sigma_f$ compression (MPa) (at fracture) | E compressive (GPa) | E tensile (GPa) | Dimensions gauge length x width x depth (mm) |
|---|---|---|---|---|---|---|---|
| 1 | 25.0 | 113 | - | 55.1 | 1.7 | - | 13.25 x 10.05 x 2.00 |
| 2 | 29.8 | 80 | - | 54.1 | 2.4 | - | 14.45 x 10.05 x 1.44 |
| 3 | 36.5 | 60 | - | 48.0 | 2.4 | - | 18.25 x 10.05 x 1.22 |
| 4 | 48.0 | 55 | - | 58.6 | 2.1 | - | 22.35 x 6.26 x 1.47 |
| 5 | 27.0 | 100 | 85.6 | - | - | 2.4 | 13.80 x 6.26 x 1.83 |
| 6 | 36.1 | 103 | 89.2 | - | - | 3.8 | 16.80 x 6.26 x 1.81 |
| 7 | 55.2 | 97 | 150.5 | - | - | 4.6 | 17.37 x 6.26 x 1.01 |
| 8 | 56.8 | 77 | 100.5 | - | - | 5.0 | 20.50 x 6.26 x 1.20 |

In the Table:

$V_f$ is the volume fraction of fibres in the matrix, as determined by weighing the fibres before incorporation and reweighing the composite samples after incorporation. The true volume fraction should be slightly lower in value due to the escape of a few fibres from the mould.

The maximum load is the load in Kg when the sample fractured, either under a tensile load (Samples 5 to 8), or a compressive load (Samples 1 to 4).

$\sigma_f$ tension is the tensile load applied to Samples 5 to 8 to fracture them.

$\sigma_f$ compression is the compressive load applied to Samples 1 to 4 to fracture them.

E compressive and E tensile are the compressive and tensile Youngs Moduli as measured on Samples 1 to 4 and 5 to 8 respectively.

The dimensions are expressed as gauge length x width x depth, the gauge length being the effective length of the sample for measurement purposes, the true length in each case being greater.

Tests were also carried out on polymerised fibres of the N-carbazole derivative polydiacetylene type to determine their creep properties at 100°C. The results of these tests show that no creep took place. Similar tests carried out on ethyl urethane derivative polydiacetylene fibres at 20°C also showed no creep.

From the fact that the fibres show no creep it can be reasonably assumed that composites containing those fibres will likewise show no fibre creep, and any creep will be limited to matrix creep.

CLAIMS:

1. A fibre-reinforced composite material comprising a maxtrix in which are incorporated polymer single crystal fibres.

2. A material according to claim 1, in which the polymer single crystal fibres are of a polydiacetylene.

3. A material according to claim 2, in which the polydiacetylene has the formula $\left[\underset{R_1}{C}-C\equiv C-\overset{R_2}{C}\right]_n$, with $R_1$ and $R_2$ being the same as one another and being selected from the group consisting of

$-CH_2-O-\overset{O}{\overset{\|}{C}}-NH-C_2H_5$ (ethyl urethane)

$-CH_2-O-\overset{O}{\overset{\|}{C}}-NH-C_6H_5$ (phenyl urethane)

and

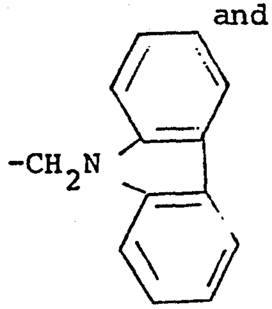

(N-carbazole)

4. A material according to claim 1, in which the matrix comprises an epoxy resin.

5. A material according to claim 2, in which the matrix comprises an epoxy resin.

6. A material according to claim 3, in which the matrix comprises an epoxy resin.